**Europäisches Patentamt**

**European Patent Office**

**Office européen des brevets**

(19)

(11) Veröffentlichungsnummer : **0 375 708 B1**

(12) **EUROPÄISCHE PATENTSCHRIFT**

(45) Veröffentlichungstag der Patentschrift :
**29.01.92 Patentblatt 92/05**

(21) Anmeldenummer : **88907071.0**

(22) Anmeldetag : **17.08.88**

(86) Internationale Anmeldenummer :
**PCT/EP88/00732**

(87) Internationale Veröffentlichungsnummer :
**WO 89/01887 09.03.89 Gazette 89/06**

(51) Int. Cl.⁵ : **B60T 7/12, B60K 41/20**

(54) **AUTOMATISCHE FESTSTELLBREMSE.**

(30) Priorität : **28.08.87 DE 3728709**

(43) Veröffentlichungstag der Anmeldung :
**04.07.90 Patentblatt 90/27**

(45) Bekanntmachung des Hinweises auf die
Patenterteilung :
**29.01.92 Patentblatt 92/05**

(84) Benannte Vertragsstaaten :
**DE FR GB IT SE**

(56) Entgegenhaltungen :
**DE-A- 3 709 157**
**US-A- 4 446 950**

(73) Patentinhaber : **ROBERT BOSCH GmbH**
**Postfach 10 60 50**
**W-7000 Stuttgart 10 (DE)**

(72) Erfinder : **SIGL, Alfred**
**Waldeck 8**
**W-7126 Sersheim (DE)**
Erfinder : **JONNER, Wolf-Dieter**
**Burgunderstrasse 25**
**W-7141 Beilstein-Schmidhausen (DE)**

(74) Vertreter : **Kammer, Arno, Dipl.-Ing.**
**ROBERT BOSCH GmbH Zentralstelle**
**Patente-Elektronik Postfach 10 60 50**
**W-7000 Stuttgart 1 (DE)**

Jouve, 18, rue Saint-Denis, 75001 PARIS

**Beschreibung**

Die Erfindung betrifft eine automatische Feststellbremse mit den Merkmalen des Oberbegriffs des Anspruchs 1.

Stand der Technik

Aus der DE-OS 35 40 305 ist eine automatische Feststellbremse bekannt, bei der bei Betätigen von Brems- und Kupplungspedal ein Ventil geschaltet wird, durch das auch nach Freigabe der Bremse der eingesteuerte Bremsdruck erhalten bleibt. Wird das Kupplungspedal freigegeben und kurz danach das Gaspedal betätigt, so wird der Druck abgebaut. Durch die Verwendung eines Geschwindigkeitssignals wird sichergestellt, daß es während der Fahrt zu keinem Druckaufbau kommt.

Aus der DE-OS 35 12 716 ist es bekannt, den Bremsdruck in Stufen zu erhöhen, wenn die Fahrzeuggeschwindigkeit null ist und das Bremspedal niedergedrückt wird.

Aufgabe und Lösung

Der Erfindung liegt die Aufgabe zugrunde die bekannte Feststellbremse zu verbessern.

Diese Aufgabe durch die im dem Ansprüchen 1 and 20 angegebenen Merkmale gelöst.

Der Übergang von der normalen Abbremsung in die Bremsung durch die Feststellbremse soll einerseits für den Fahrer nicht spürbar sein, andererseits soll die Feststellbremse mit dem Erreichen des Fahrzeugstillstandes wirksam sein. Die Einbeziehung der Fahrzeugverzögerung sowohl bei der Festlegung des Zeitpunkts ab dem der Bremsdruckaufbau beginnen soll, als auch bei der Berechnung der Druckaufbaugeschwindigkeit bringt eine wesentliche Verbesserung.

Die Berücksichtigung der Drosselklappenstellung (DKS) für den Start einer Druckabbaupulsreihe beim Lösen der Feststellbremse bringt nicht für alle Fälle ein befriedigendes Übergangsverhalten. Eine wesentliche Verbesserung erreicht man durch die Berechnung der momentanen Antriebsleistung aus einem Kennfeld $M_{Antr}$ = f (DKS, NM) und zusätzlicher Berücksichtigung der Motordynamik z.B. mittels eines Verzögerungsglieds 1. Ordnung.

Der Abpulsvorgang wird dann nicht an einer vorgegebenen Verdrehung der Drosselklappe, sondern ab einer vorgegebenen Antriebsmomenten- bzw. Motorlastschwelle gestartet. Weiterhin wird bei hohen Motormomenten der Druckabbau beschleunigt.

Druckabbau wird ausgelöst bei $M_{Antr.} > M_x$ und die Pausenzeit der Abbaupulsreihe wird z.B. gemäß

$$T_{Pause} = \frac{K4}{M_{Antr.}} \text{ bemessen.}$$

Der Beginn und Ablauf der Druckentlastung liegt bei Fahrzeugen mit Schaltgetriebe oft falsch. Zur Verbesserung gibt es zwei Möglichkeiten:

1. Auswertung des Kupplungspedalweges mit Lernbedingung für den Eingriffspunkt oder in Kombination mit ASR die

2. Auswertung der Motordrehzahl und der Drosselklappenstellung.

Im zweiten Fall wird die Motordrehzahl mittels eines einfachen Motormodells aus der Drosselklappenstellung und vorgegebenen Motorparametern für den unbelasteten Motor berechnet. Ist die gemessene Motordrehzahl deutlich kleiner oder hat sie stark abnehmende Tendenz, ist dies ein Indiz eines Einkuppelvorgangs (zusätzliche Motorlast). Es wird deshalb Druckabbau ausgelöst bei

$$(M_{Antr.} > M_x) \cdot (NM_{gemessen} << NM_{berechnet}).$$

Mittels eines bei ASR oder ABS verwendeten sogenannten Längsbeschleunigungsmessers oder einer Kombination zweier Sensoren (z.B. mit je 45 % Neigungswinkel) läßt sich die Fahrbahnsteigung ermitteln.

Der zum Festhalten des Fahrzeugs notwendige Druck ist annähernd proportional zur Fahrbahnsteigung. Es ist daher sinnvoll und für den beim Losfahren optimalen Druckabbau wichtig, den einzuspeisenden Druck mittels der Fahrbahnsteigung zu berechnen. Dies kann z.B. durch die Festlegung der Anzahl der Druckaufbaupulse erfolgen. (Anzahl Druckaufbaupulse = K5 . Steigung).

Die derzeit eingesetzten Radgeschwindigkeitssensoren arbeiten erst ab einer bestimmten Mindestge-schwindigkeit $V_{min}$. Beginnt ein Fahrzeug trotz betätigter Feststellbremse wegzurollen, so ist dies zuerst am Beschleunigigungssignal ersichtlich. Ändert sich das Fahrzeugbeschleunigungssignal, wenn der Fahrer z.B. die Bremse löst (Abfall BLS), ist es sinnvoll den Druck für die Feststellbremse zu steigern (bis der alte Beschleu-nigungswert wieder erreicht wird).

Beim Auftreten von Antriebsschlupf wird vorzugsweise der Druckabbau angehalten bzw. stark verlangsamt bis ASR eingreift z.B. durch Variation der Dauer der Aufbauimpulse:

$$T_{Puls} = K6 \cdot \frac{1}{VAN - VNA}$$ wobei $T_{Puls}$ z.B. zwischen 3 und 5 msec variieren kann.

Damit kann das Anfahrverhalten von ASR verbessert werden, da der Antriebsschlupf auch im ersten ASR-Regelzyklus begrenzt bleibt. Es wird daher eine Feststellbremse auch für Fahrzeug mit Automatikgetriebe sinnvoll.

Man kann anstelle der Fahrzeuggeschwindigkeit auch die Geschwindigkeit der angetriebenen (VAN) oder nichtangetriebenen (VNA) Fahrzeugachse auswerten. Anstelle der bisherigen Geschwindigkeit VF wird VNA gesetzt. VAN wird benützt um Antriebsschlupf auszuwerten.

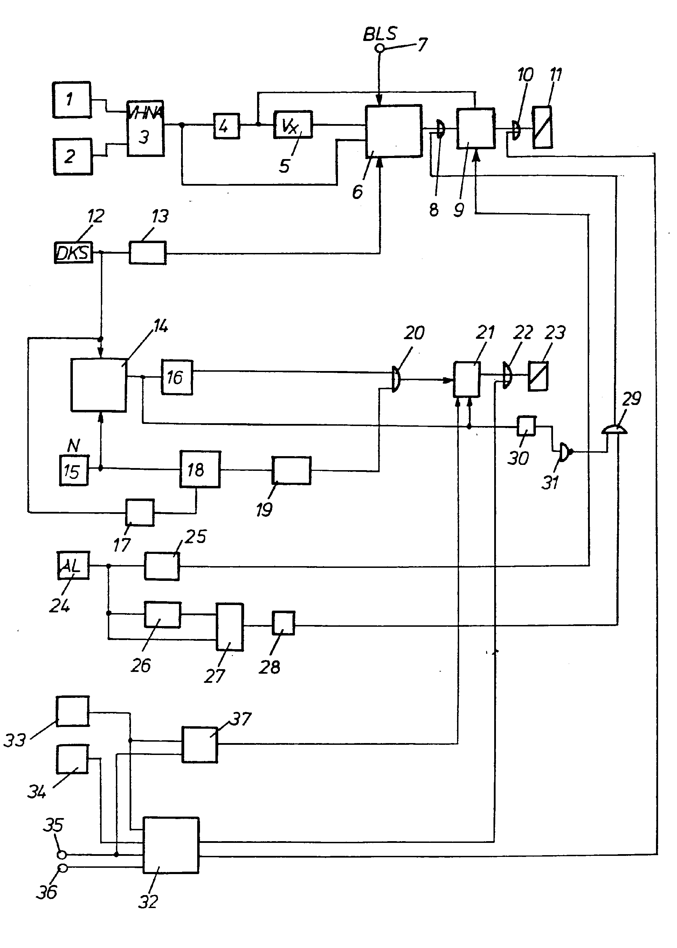

Anhand der Zeichnung wird ein Ausführungsbeispiel der Erfindung erläutert

Mit 1 und 2 sind den nicht angetriebenen Rädern eines Fahrzeugs zugeordnete Radgeschwindigkeitssensoren bezeichnet. Aus deren Signale wird in einem Block 3 in bekannter Weise eine Referenzgröße gewonnen, die dem Verlauf der Fahrzeuggeschwindigkeit $v_F$ angenähert ist. In einem Differenzierer 4 wird die Fahrzeugverzögerung $\dot{v}_F$ gewonnen und einem Block 5 zugeführt, in dem der Ausdruck

$$V_x = K_1 \, \dot{v}_F - K_2$$

gebildet wird, wobei $K_1$ und $K_2$ Konstante sind. Diese Größe wird einem Vergleicher 6 zugeführt, der die Fahrzeuggeschwindigkeit mit der Größe $V_x$ vergleicht und ein Signal abgibt, wenn $v_F \leqq V_x$ wird und zusätzlich über eine Klemme 7 das Bremslichtschaltersignal eingekoppelt wird und die Drosselklappe in der O-Stellung ist. Ein Signalgeber für die Drosselklappenstellung (DKS) ist mit 12 und eine nachgeschaltete Schwellwertstufe mit einem Schwellwert nahe 0 mit 13 bezeichnet.

Das Ausgangssignal des Vergleichers 6 setzt einen Impulsgeber 9 in Betrieb, dessen Impulse ein Einlaßventil 11 betätigen, wodurch ein Bremsdruckgeber intermittierend an die Bremsen angeschaltet wird. Dem Impulsgeber 9 wird das Fahrzeugverzögerungssignal zugeführt und dieser bemißt die Pausenzeiten $T_p$ zwischen den Impulsen zu

$$T_P = \frac{K_3}{\dot{v}_F} \, ,$$

wobei $K_3$ eine Konstante ist.

$V_x$ wird vorzugsweise auf z.B. 5 km/h begrenzt und sollte im Falle einer laufenden ABS-Regelung nicht über ca. 1 km/h angehoben werden können.

Im einem Block 14 ist das Kennlinienfeld $M_A = f$ (DKS; N) gespeichert. Bei Eingabe eines die augenblickliche Drosselklappenstellung anzeigenden Signals DKS vom Geber 12 und eines die augenblickliche Drehzahl des Motors anzeigenden Signals N von einem Geber 15 ergibt sich aus dem Kennlinienfeld ein bestimmtes Antriebsmoment; das entsprechende Signal wird einer Schwellwertstufe 16 zugeführt, die nach Überschreiten einer Schwelle M ein Signal abgibt.

In einem Block 17 wird aus der Drosselklappenstellung und bekannten Motorgrößen ein Signal gewonnen, das der Drehzahl ohne Last entspricht. Dieses errechnete Drehzahlsignal wird in einem Vergleicher 18 mit dem gemessenen Drehzahlsignal verglichen. Eine Schwellwertstufe 19 gibt ein Signal an ein Und-Gatter 20, wenn die gemessene Drehzahl um einen hohen Betrag kleiner als die errechnete Drehzahl ist.

Erhält das Und-Gatter auf beiden Eingängen Signal, so wird ein Impulsgeber 21 in Betrieb gesetzt, der ein Auslaßventil 23 ansteuert, wodurch Bremsdruck gepulst abgebaut wird. Dem Impulsgenerator 21 wird das Antriebsmoment $M_A$ zugeführt, und dieser bemißt die Pausen $T_p$ zwischen den Impulsen gemäß der Beziehung

$$T_P = \frac{K_4}{M_A}$$

wobei $K_4$ eine Konstante ist.

Man kann noch zusätzlich die Fahrbahnsteigung messen und diese in die Bemessung des eingesteuerten Drucks eingehen lassen. Hierzu ist ein Längsbeschleunigungsgeber 24 vorgesehen. In einem nachgeschalteten Block 25 wird ein Signal gebildet, das von der Steigung abhängig ist, und dem Impulsgenerator 9 zugeführt. Dieses Signal bestimmt die Anzahl der vom Impulsgeber 9 abzugebenden Druckaufbauimpulse.

Setzt sich das Fahrzeug in Bewegung, so ändert sich das Ausgangssignal des Längsbeschleunigungsgeber 24. Diese Änderung wird mittels eines Speichers 26 und eines Vergleichers 27 festgestellt. Wird die niedrige Schwelle eines Schwellwertgebers 28 überschritten, so wird ein Signal abgegeben, das, wenn ein Und-Gatter 29 an seinem zweiten Eingang Signal erhält, über ein Oder-Gatter 8 zum Impulsgeber gelangt und diesen erneut in Betrieb setzt, und damit Druck aufbaut.

Das Und-Gatter 29 erhält wegen eines Inversionsglieds 31 ein Signal am zweiten Eingang, wenn das Antriebsmoment den Schwellwert einer Schwellwertstufe 30 unterschreitet und damit die Schwellwertstufe 30 kein Signal liefert.

Ein Block 32 stellt die Elektronik der Antriebsschlupfregelung des Fahrzeugs dar. Diesem werden die von den angetriebenen Rädern mittels Sensoren 33 und 34 abgeleiteten Geschwindigkeitssignale und die Signale der nicht angetriebenen Rädern zugeordneten Meßwertgeber 1 und 2 (über Klemme 35 und 36) zugeführt. Die in der Elektronik 32 erzeugten Bremsdrucksteuersignale werden über Oder-Gatter 10 und 22 den Ventilen zugeführt.

Zusätzlich wird in einem Block 37 (nur für ein Radpaar gezeigt) ein Signal gewonnen, das der Beziehung

$$T_{Puls} = K_6 \frac{1}{V_A - V_{NA}}$$

($V_A$ Geschwindigkeit angetriebenes Rad, $V_{NA}$ Geschwindigkeit nicht angetriebenes Rad, $K_6$ Konstante) folgt. Dieses Signal wird dem Impulsgeber 21 zugeführt, der die Impulsbreite $T_{Puls}$ der Druckabbauimpulse entsprechend bemißt, also bei Entstehen eines Antriebsschlupfes die Impulsbreite verkleinert und somit die Druckabbaugeschwindigkeit verringert.

Man kann den Erfindungsgedanken auch dadurch realisieren, daß man aus der z.B. gemessenen Fahrzeugverzögerung bei Erreichen eines kleinen Fahrzeuggeschwindigkeitswerts von z.B. 10 Km/h ausrechnet, wann das Fahrzeug bei Beibehaltung der Verzögerung zum Stillstand kommen wird und daß man zu diesem errechneten Zeitpunkt den Bremsdruck einsteuert und beibehält. Man kann dieses Errechnen und Einsteuern noch von der Bremsbetätigung abhängig machen.

## Patentansprüche

1. Automatische Feststellbremse für ein Fahrzeug, bei der bei Unterschreiten eines sehr kleinen Geschwindigkeitswert $V_x$ durch das Fahrzeug und Betätigen des Bremspedals Bremsdruck mittels eines Ventils aufgebaut und danach Konstantgehalten wird und bei gewünschtem Anfahren Druck abgebaut wird, dadurch gekennzeichnet, daß der Geschwindigkeitswert $V_x$ variabel und von der Fahrzeugverzögerung abhängig ist derart, daß mit steigender Fahrzeugverzögerung $V_F$ der Geschwindigkeitswert erhöht wird.

2. Feststellbremse nach Anspruch 1, dadurch gekennzeichnet, daß $V_X$ sich gemäß der folgenden Beziehung ändert:

$$V_X = K_1 \cdot \dot{V}_F - K_2$$

wobei $K_1$ und $K_2$ Konstante sind.

3. Feststellbremse insbesondere nach Anspruch 1 oder 2, dadurch gekennzeichnet, daß die Druckaufbaugeschwindigkeit von der Fahrzeugverzögerung abhängt derart, daß mit steigender Farzeugverzögerung $\dot{V}_F$ die Druckaufbaugeschwindigkeit zunimmt.

4. Feststellbremse nach Anspruch 3 mit stufenförmigen Druckaufbau, dadurch gekennzeichnet, daß die Länge der Konstanthaltephasen der Druckaufbauimpulse umgekehrt proportional der Fahrzeugverzögerung ist.

5. Feststellbremse insbesondere nach einem der Ansprüche 1-4, dadurch gekennzeichnet, daß der Abbau des Bremsdrucks bei Ereichen eines vorgegebenen Antriebsmoments $M_A$ erfolgt.

6. Feststellbremse nach Anspruch 1-5, dadurch gekennzeichnet, daß die Druckabbaugeschwindigkeit von Antriebsmoment $M_A$ abhängig ist, derart, daß die Abbaugeschwindigkeit mit dem momentanen Antriebsmoment ansteigt.

7. Feststellbremse nach Anspruch 6 mit stufenförmigen Druckabbau, dadurch gekennzeichnet, daß die Länge der Konstanthaltephase der Druckabbauimpulse umgekehrt proportional zum Antriebsmoment ist.

8. Feststellbremse nach einem der Ansprüche 5-7, dadurch gekennzeichnet, daß das momentane Antriebsmoment aus einem Kennfeld

$$M_A = f(DKS, N)$$

gewonnen wird, wobei DKS die Stellung des Glieds zur Bemessung der Energiezufuhr und N die Motordrehzahl ist.

9. Feststellbremse nach einem der Ansprüche 5-8, dadurch gekennzeichnet, daß bei Fahrzeugen mit Handschaltgetriebe der Beginn des Druckabbaus zusätzlich von der Kupplungsbetätigung abhängt.

10. Feststellbremse nach einem der Ansprüche 5-8, dadurch gekennzeichnet, daß bei Fahrzeugen mit Handschaltgetriebe der Beginn des Druckabbaus zusätzlich von der Feststellung einer schnell abnehmenden, gemessenen Motordrehzahl abhängt.

11. Feststellbremse insbesondere nach einem der Ansprüche 5-8, dadurch gekennzeichnet, daß bei Fahrzeugen mit Handschaltgetriebe der Beginn des Druckabbaus zusätzlich oder alleinig von dem Vergleich der gemessenen Motordrehzahl und einer für den unbelasteten Motor aus der Drosselklappenstellung errechneten Motordrehzahl abhängig ist, wobei der Druckabbau einsetzt, wenn die gemessenen Drehzahlen um einen vorgegebenen hohen Wert unter der errechneten Drehzahl liegt.

12. Feststellbremse, insbesondere nach einem der Ansprüche 1-11, dadurch gekennzeichnet, daß die Druckeinspeisung oder der Druckabbau von der mittels eines oder mehrerer Längsbeschleunigungssensoren ermittelten Fahrbahnsteigung abhängt.

13. Feststellbremse nach Anspruch 12, dadurch gekennzeichnet, daß die Zahl der Druckaufbauimpulse von der Fahrbahnsteigung anhängig ist.

14. Feststellbremse nach Anspruch 12 oder 13, dadurch gekennzeichnet, daß bei Freigabe des Bremspedals der Längsbeschleunigungsgeber auf Änderung seines Ausgangswerts überwacht wird und daß bei einer Änderung der Bremsdruck erhöht wird.

15. Feststellbremse nach einem der Ansprüche 1-14, für ein mit einer Antriebsschlupfregelung ausgerüstetem Fahrzeug, dadurch gekennzeichnet, daß bei Auftreten von Antriebsschlupf der Druckabbau unterbrochen oder verlangsamt wird.

16. Feststellbremse nach Anspruch 15, dadurch gekennzeichnet, daß die Länge der Druckabbauimpulse mit steigendem Antriebsschlupf erniedrigt wird.

17. Feststellbremse nach Anspruch 1-16, dadruch gekennzeichnet, daß zur Druckeinspeisung Stellglieder und eine vorhandene Druckversorgung von ABS/ASR mitverwendet werden.

18. Feststellbremse nach einem der Ansprüche 1-17, dadurch gekennzeichnet, daß der eingespeiste Bremsdruck nach Abschalten der Betriebsspannung zeitlich verzögert abgebaut wird.

19. Feststellbremse nach Anspruch 1-18, dadurch gekennzeichnet, daß der Fahrer mit dem Ausschalten der Betriebspannung ortisch oder akustisch auf den Abfall des automatischen Feststellbremsdruckes hingewiesen wird.

20. Automatische Feststellbremse für ein Fahrzeug, bei der Feststellbremsdruck nach Fahrzeughalt mittels eines Ventils eingesteuert und dann beibehalten wird und erst bei einem gewünschten Anfahren abgebaut wird, dadurch gekennzeichnet, daß bei Erreichen eines kleinen Geschwindigkeitswerts (z.B.10 Km/h) aufgrund der dann gemessenen Fahrzeugverzögerung durch Extrapolation ermittelt wird, wann das Fahrzeug zum Halten kommt und daß zu dem ermittelten Zeitpunkt der Feststellbremsdruck eingesteuert wird.

**Claims**

1. Automatic parking brake for a vehicle in which, when the vehicle is travelling at less than a very small velocity value $V_X$ and the brake pedal is operated, brake pressure is built up by means of a valve and subsequently kept constant and pressure is reduced when it is desired to move off, characterised in that the velocity value $V_X$ is variable and depends on the vehicle deceleration in such a way that the velocity value is increased with increasing vehicle deceleration $\dot{V}_F$.

2. Parking brake according to Claim 1, characterised in that $V_X$ changes in accordance with the following relationship:

$$V_X = K_1 \cdot \dot{V}_F - K_2$$

where $K_1$ and $K_2$ are constants.

3. Parking brake, in particular according to Claim 1 or 2, characterised in that the rate of build-up of pressure depends on the vehicle deceleration in such a way that the rate of build-up of pressure increases with increasing vehicle deceleration $\dot{V}_F$.

4. Parking brake according to Claim 3 with stepped build-up of pressure, characterised in that the length of the phases during which the pressure build-up pulses are held constant is inversely proportional to the vehicle deceleration.

5. Parking brake, in particular according to one of the Claims 1-4, characterised in that the reduction of the brake pressure takes place on reaching a specified drive torque $M_A$.

6. Parking brake according to Claims 1-5, characterised in that the rate of reduction of pressure depends on the drive torque $M_A$ in such a way that the rate of reduction increases with the instantaneous driving torque.

7. Parking brake according to Claim 6 with stepped reduction of pressure, characterised in that the length of the phase during which the brake reduction pulses are held constant is inversely proportional to the drive torque.

8. Parking brake according to one of the Claims 5-7, characterised in that the instantaneous drive torque is obtained from a characteristic field

$$M_A = f(DKS, N),$$

where DKS is the position of the element for measuring the supply of energy and N is the engine rotational speed.

9. Parking brake according to one of the Claims 5-8, characterised in that in the case of vehicles with a manual gearbox, the beginning of the reduction of pressure additionally depends on the operation of the clutch.

10. Parking brake according to one of the Claims 5-8, characterised in that in the case of vehicles with a manual gearbox, the beginning of the reduction of pressure additionally depends on the determination of a rapidly decreasing, measured engine rotational speed.

11. Parking brake, in particular according to one of the Claims 5-8, characterised in that in the case of vehicles with a manual gearbox, the beginning of the reduction of pressure depends, additionally or alone, on the comparison of the measured engine rotational speed and an engine rotational speed calculated, for the unloaded engine, from the throttle butterfly position, the reduction of pressure commencing when the measured rotational speed is less than the calculated rotational speed by a specified high value.

12. Parking brake, in particular according to one of the Claims 1-11, characterised in that the pressure supply or the pressure reduction depends on the roadway slope determined by means of one or more longitudinal acceleration sensors.

13. Parking brake according to Claim 12, characterised in that the number of the pressure build-up pulses depends on the roadway slope.

14. Parking brake according to Claim 12 or 13, characterised in that on release of the brake pedal, the longitudinal acceleration sensor is monitored for alteration of its initial value and that, in the case of an alteration, the brake pressure is increased.

15. Parking brake according to one of the Claims 1-14, for a vehicle equipped with drive slip control, characterised in that on the appearance of drive slip, the reduction in pressure is interrupted or retarded.

16. Parking brake according to Claim 15, characterised in that the length of the pressure reduction pulses is lowered with increasing drive slip.

17. Parking brake according to Claims 1-16, characterised in that adjusting elements and an existing pressure supply from anti-lock brake system/anti-slip regulation are also used for supplying pressure.

18. Parking brake according to one of the Claims 1-17, characterised in that the brake pressure supplied is reduced after a delay time when the operating voltage is switched off.

19. Parking brake according to Claims 1-18, characterised in that when the operating voltage is switched off, the driver has his attention drawn optically or acoustically to the reduction of the automatic parking brake pressure.

20. Automatic parking brake for a vehicle in which the parking brake pressure is selected by means of a valve after the vehicle comes to rest and is then retained and is only reduced when it is desired to drive off, characterised in that on reaching a small velocity value (e.g. 10 km/h) the time when the vehicle will come to rest is determined, by extrapolation, from the vehicle deceleration measured at the time and that the parking brake pressure will be selected at the time determined.

**Revendications**

1. Frein automatique de stationnement pour un véhicule, dans lequel, lors du dépassement par le véhicule d'une très petite valeur de vitesse $V_x$ et de l'actionnement de la pédale de frein, une pression de freinage est établie au moyen d'une vanne et est ensuite maintenue constante, tandis que lorsqu'on désire démarrer cette pression est supprimée, frein automatique de stationnement caractérisé en ce que la valeur $V_x$ de la vitesse est variable et dépend de la décélération du véhicule, de sorte que cette valeur de la vitesse est augmentée lorsque la décélération $V_F$ du véhicule augmente.

2. Frein de stationnement selon la revendication 1, caractérisé en ce que $V_x$ se modifie selon la relation suivante :

$$V_X = K_1 \cdot \dot{V}_F - K_2$$

dans laquelle $K_1$ et $K_2$ sont des constantes.

3. Frein de stationnement notamment selon la revendication 1 ou la revendication 2, caractérisé en ce que la vitesse d'établissement de la pression dépend de la décélération du véhicule, de façon que, lorsque la décélération $\dot{V}_F$ du véhicule augmente, la vitesse d'établissement de la pression croît.

4. Frein de stationnement selon la revendication 3, avec un établissement de la pression par échelons, caractérisé en ce que la longueur des phases de maintien à un niveau constant des impulsions d'établissement de la pression est inversement proportionnelle à la décélération du véhicule.

5. Frein de stationnement, notamment selon l'une des revendications 1 à 4, caractérisé en ce que la suppression de la pression de freinage s'effectue lorsqu'un couple d'entraînement prédéfini $M_A$ est lorsqu'un couple d'entraînement prédéfini $M_A$ est atteint.

6. Frein de stationnement selon l'une des revendications 1 à 5, caractérisé en ce que la vitesse de suppression de la pression dépend du couple d'entraînement $M_A$, de façon que cette vitesse de suppression croisse avec le couple momentané d'entraînement.

7. Frein de stationnement selon la revendication 6, avec une suppression de la pression par échelons, caractérisé en ce que la longueur des phases de maintien à un niveau constant des impulsions de suppression de la pression est inversement proportionnelle au couple d'entraînement.

8. Frein de stationnement selon l'une des revendications 5 à 7, caractérisé en ce que le couple momentané d'entraînement est obtenu à partir d'un champ caractéristique :

$$M_A = f(DKS, N)$$

DKS étant la position de l'organe permettant de définir l'apport d'énergie et N la vitesse de rotation de moteur.

9. Frein de stationnement selon l'une des revendications 5 à 8, caractérisé en ce que, dans des véhicules à changement de vitesses manuel, le début de la suppression de la pression dépend en outre de l'actionnement de l'embrayage.

10. Frein de stationnement selon l'une des revendications 5 à 8, caractérisé en ce que, dans des véhicules à changement de vitesses manuel, le début de la suppression de la pression dépend en outre de la constatation d'une décroissance rapide de la vitesse de rotation du moteur, dont la mesure est effectuée.

11. Frein de stationnement, notamment selon l'une des revendications 5 à 8, caractérisé en ce que, dans des véhicules à changement de vitesses manuel, le début de la suppression de la pression dépend en outre ou uniquement de la comparaison entre la vitesse de rotation du moteur qui a été mesurée et une vitesse de rotation du moteur calculée à partir de la position du clapet d'étranglement pour le moteur non chargé, auquel cas la suppression de la pression commence lorsque les vitesses de rotation mesurées sont inférieures, d'une valeur élevée prédéfinie, à la vitesse de rotation calculée.

12. Frein de stationnement, notamment selon l'une des revendications 1 à 11, caractérisé en ce que l'alimentation en pression ou la suppression de la pression dépend de la pente de la chaussée détectée par un ou plusieurs détecteurs d'accélération longitudinale.

13. Frein de stationnement selon la revendication 12, caractérisé en ce que le nombre des impulsions d'établissement de la pression dépend de la pente de la chaussée.

14. Frein de stationnement selon la revendication 12 ou la revendication 13, caractérisé en ce que, lors de la libération de la pédale de frein, l'indicateur d'accélération longitudinale est surveillé en ce qui concerne une modification de sa valeur de sortie, et en ce que, dans le cas d'une modification, la pression de freinage est augmentée.

15. Frein de stationnement selon l'une des revendications 1 à 14, pour un véhicule équipé d'une régulation du patinage de l'entraînement, caractérisé en ce que, lorsqu'intervient le patinage de l'entraînement, la suppression de la pression est interrompue ou ralentie.

16. Frein de stationnement selon la revendication 15, caractérisé en ce que la longueur des impulsions de suppression de la pression est diminuée lorsque le patinage de l'entraînement augmente.

17. Frein de stationnement selon l'une des revendications 1 à 16, caractérisé en ce que, pour l'alimentation en pression, des organes de réglage et une alimentation en pression de ABS/ASR existante sont conjointement utilisés.

18. Frein de stationnement selon l'une des revendications 1 à 17, caractérisé en ce que la pression de freinage alimentée est supprimée d'une façon temporisée après la coupure de la tension de fonctionnement.

19. Frein de stationnement selon l'une des revendications 1 à 18, caractérisé en ce qu'avec la coupure de la tension de fonctionnement, l'attention du conducteur est attirée optiquement ou acoustiquement sur la chute de la pression du frein automatique de stationnement.

20. Frein automatique de stationnement pour un véhicule, dans lequel la pression du frein de stationnement, après l'arrêt du véhicule, est commandée par une vanne et est ensuite maintenue, pour n'être supprimée que lorsqu'on désire démarrer, frein de stationnement caractérisé en ce que, lorsqu'une faible valeur de la vitesse (par exemple 10 Km/h) est atteinte, on détermine par extrapolation, sur la base de la décélération du véhicule qui a été alors mesurée, quand le véhicule s'arrêtera, et en ce que, à l'instant ainsi déterminé, la pression du frein de stationnement est commandée.